# EUROPÄISCHE PATENTSCHRIFT

(11) **EP 1 419 320 B1**
(45) Veröffentlichungstag und Bekanntmachung des Hinweises auf die Patenterteilung: **22.12.2004**
(21) Anmeldenummer: 02764552.2
(22) Anmeldetag: 22.08.2002
(51) Int. Cl.: F16C 1/18, B60T 7/10

(54) **VORRICHTUNG ZUM BETÄTIGEN EINES SEILZUGS**
DEVICE FOR ACTUATING A CABLE
DISPOSITIF POUR L'ACTIONNEMENT D'UN CABLE

(30) Priorität: 24.08.2001 DE 10141508
(43) Veröffentlichungstag der Anmeldung: 19.05.2004
(73) Patentinhaber: Edscha Betätigungssysteme GmbH, 94491 Hengersberg (DE)
(72) Erfinder: GUTIERREZ FERNANDEZ, José, Manuel, E-39001 Santander (ES)
(74) Vertreter: Sparing, Rolf Klaus
(86) Internationale Anmeldenummer: PCT/DE2002/003082
(87) Internationale Veröffentlichungsnummer: WO 2003/019021

(56) Entgegenhaltungen:
- FR-A- 2 768 679
- US-A- 3 730 318
- US-A- 4 649 766
- US-A- 5 065 643
- US-A- 5 245 886

## Beschreibung

Die Erfindung betrifft eine Vorrichtung zum Betätigen eines Seilzugs, nach dem Oberbegriff des Anspruch 1.

Derartige Betätigungsvorrichtungen können zu den verschiedensten Zwecken eingesetzt sein. In Kraftfahrzeugen werden sie zum Beispiel zum Betätigen einer Feststellbremse benutzt. Die Feststellbremse wird üblicherweise als Handbremse bezeichnet, weil sie meist über einen Handhebel betätigt wird. Daneben sind aber auch fußbetätigte Feststellbremsen bekannt. Die Betätigung einer solcher Bremse erfolgt über einen Seilzug, der sich jedoch über die Gebrauchsdauer des Kraftfahrzeugs hin ausdehnt bzw. durch Verschleiß der Bremsbeläge eine Änderung des Betätigungsweges erfolgt. Wird infolge dieser Ausdehnung eine noch zulässige Winkelgröße der Verschwenkung des Betätigungshebels überschritten, so muß der Seilzug der Bremsbetätigung nachgestellt werden.

US 5 660 082 zeigt eine Vorrichtung zum Betätigen eines Seilzugs mit einem um eine Achse schwenkbaren einarmigen Hebel , eine Verbindungsvorrichtung zum zugfesten Verbinden des Seilzugs mit dem Hebel in einem Abstand zur Schwenkachse des Hebels, wobei als Verbindungsvorrichtung ein U-förmiges Teil mit konstanter Wirklänge dient. Der Hebel weist eine gradlinig ausgebildete Führungskulisse auf, in welcher ein mit dem Seilzug zugfest verbundenes Ankopplungsglied gelagert ist und das Ankopplungsglied derart in der Führungskulisse geführt ist, daß es sich beim Verschwenken des Hebels in der Führungskulisse verschiebt und seinen Abstand zur Schwenkachse des Hebels vermindert. In der Führungskulisse ist eine mittels einer Drehschraube justierbare Sperre angeordnet, die die Bewegung des Ankopplungsglieds in der Führungskulisse beim Betätigen der Bremsvorrichtung limitiert.

Nachteilig bei dieser Art von Bremsen ist zum einen, daß keine Möglichkeit besteht die Wirklänge des Seilzugs zu verändern, um somit eine Veränderung der Länge des Seilzugs zu bewirken. Dies ist zum Beispiel notwendig, wenn auf Grund der Gebrauchsdauer der Seilzug sich verlängert hat. Um diese Verlängerung auszugleichen ist bei der hier aufgezeigten Feststellbremse eine Sperre zum Ändern der Schwenkmöglichkeit des Ankopplungsglieds vorgesehen, was aber dazu führt, daß damit auch der Schwenkbereich des Hebels verändert wird und somit je nach Gebrauchsdauer der Bremse der Betätiger sich auf ein neues Verhalten der Bremse einstellen muß. Ein weiterer Nachteil ist, daß das Ankopplungsglied des Zugseils in einer Führungskulisse geführt ist, hierdurch kommt es zu einer starken Beanspruchung des Ankopplungsglieds und somit unterliegt es einer starken Abnutzung.

Bisher wurde als Zugglied ein Stahlseil verwendet, das über eine Laufrolle geführt wurde. Dies führte zwangsläufig zu einer bei jeder Betätigung der Handbremse oder dergleichen wiederkehrenden Biegebeanspruchung des Zugglieds, welche die Dauerfestigkeit herabsetzte und schließlich mit dem Bruch des Stahlkabels und damit mit dem Totalausfall der Bremse endete.

FR 2 611 832 A3 zeigt eine Vorrichtung zum Betätigen eines Seilzugs mit einem Hebel und mit einer Verbindungsvorrichtung des Seilzugs mit dem Hebel, wobei die Verbindungsvorrichtung als Zugstange mit variabler Wirklänge ausgebildet ist, so daß die wirksame Länge der Verbindungsvorrichtung verringerbar ist.

Nachteilig bei dieser Art von Bremsvorrichtungen ist die Tatsache, dass die Zugstange direkt mit dem Hebel in Verbindung steht und somit bei der Betätigung der Bremse Reibwirkung zwischen der Zugstange und dem Hebel entsteht, die zu einer relativ schnellen Abnutzung der Zugstange führt.

Die bisherige konstruktive Gestaltung hatte des weiteren zur Folge, daß für die Verschwenkung des mit dem Seil verbundenen Betätigungshebels ein Bauraum von gewissem Volumen zur Verfügung stehen mußte.

US 5,065,643 beschreibt eine Vorrichtung zum Betätigen eines Seilzugs, bei der ein um eine Achse verschwenkbarer Hebel mittels einer Verbindungsvorrichtung zugfest mit dem Seilzug verbunden ist. Der Hebel ist durch einen Bolzen zwischen zwei beabstandeten Platten, die einen Hebelhalter ausbilden, schwenkbar gelagert. Die Verbindungsvorrichtung umfasst einen ersten Zwischenhebel, der mit einem ersten Ende gelenkig an dem Hebel mittels eines Bolzens angelenkt ist und mit einem zweiten Ende an einem zweiten Zwischenhebel. Der zweite Zwischenhebel ist als ein Hohlkörper mit einem rechteckigen Querschnitt und einem unteren Schlitz ausgebildet, wobei in dem Inneren des Hohlkörpers ein bewegbarer Zughaken und ein sich durch den unteren Schlitz nach außen erstreckender Justierhebel gekoppelt sind. Der Zughaken und die Ankoppelung an den Justierhebel sind mittels einer in dem Zwischenhebel geführten Justierschraube axial in dem zweiten Zwischenhebel verschiebbar gelagert. Der Justierhebel ist mit einem dem Zwischenhebel abgewandten Ende mittels eines Bolzens schwenkbar an eine Ankoppelungseinheit für das Zugseil gekoppelt. Der Bolzen erstreckt sich quer zu dem Justierhebel und ist mit seinen beiden Enden in zwei in den Platten ausgebildeten Langlöchern verschiebbar angeordnet. Bei Betätigen des Hebels wird der Bolzen innerhalb der Langlöcher verschoben und der Abstand zwischen der Schwenkachse des Hebels und der Ankoppelung an das Zugseil wird verringert.

US 5 979 266 zeigt eine Vorrichtung zum Betätigen eines Seilzugs mit einem Hebel sowie einer Verbindungsvorrichtung für das Seil mit dem Hebel. Die Verbindungsvorrichtung besteht aus einem Nockenmitnehmer, der in einer gekrümmten Führungskulisse geführt ist und einem Kabelbefestigungsring zum Anbinden des Bremsseils. Weiter ist eine Vorrichtung zum Einstellen der Ausgangsstellung des Hebels vorgesehen.

Es ist die Aufgabe der Erfindung, eine Betätigungsvorrichtung nach dem Oberbegriff des Anspruchs 1 zu schaffen, bei der die Gebrauchsdauer erheblich verlängert und der benötigte Bauraum geringer ist.

Diese Aufgabe wird erfindungsgemäß mit den kennzeichnenden Merkmalen des unabhängigen Anspruchs 1 gelöst.

Die Erfindung vermeidet bei der Betätigungsvorrichtung die Verwendung eines Seiles, und damit die Gefahr seines Bruches infolge immer wiederkehrender Biegebelastungen. Um weiterhin eine Abnutzung der Zugstange zu vermeiden, ist diese in einem Formteil geführt, das mittels einer am Hebel angeordneten Führungsvorrichtung geführt wird. Des weiteren vermindert sich das Volumen des benötigten Bauraumes, da sich beim Verschwenken des Hebels das Gleitstück in Richtung Drehachse verschiebt, also einen äußeren Schwenkbereich nicht benötigt.

Schließlich kann eine Nachstellung sehr bequem durchgeführt werden, da die vorgesehene längenvariable Zugstange nahe dem Ende des Hebels sehr gut zugänglich ist.

Der letztgenannte Vorteil kann in besonders einfacher Weise erzielt werden, indem die Zugstange, vorzugsweise am Ende, ein Schraubgewinde aufweist, das mit einer Schraubenmutter zusammenwirkt. Eine kinematisch umgekehrte Anordnung ist jedoch auch möglich. Dann ist die Zugstange als Schraubenmutter ausgebildet, in die eine Schraube eindrehbar ist. Der Schraubenkopf tritt dann an die Stelle der hier verwendeten Schraubenmutter.

In sicherer und einfacher Weise wird die Erfindung verwirklicht, wenn das Gleitstück vom Schraubgewinde der Zugstange durchdrungen ist und von der Schraubenmutter gegen die Gleitbahn gehalten wird. Zur Verkürzung der Baulänge kann das Gleitstück eine Vertiefung zur mindestens teilweisen Aufnahme der Schraubenmutter aufweisen. Zur erhöhten Sicherheit gegen Lösen auch bei Vibration und dergleichen kann die Schraubenmutter selbsthemmend ausgebildet sein.

Zur leichtgängigen Betätigung bietet es sich an, daß das Gleitstück zumindest an seinen Gleitflächen aus gleitreibungsarmem Werkstoff, z.B. Bronze oder Kunststoff, wie Polyamid, besteht. Eine sichere und dauerhafte Montage wird dadurch verbessert, daß Führungs- oder Haltemittel an der Gleitbahn und/oder am Gleitstück vorgesehen sind, die ein Abheben und/oder ein Längsverschieben des Gleitstücks relativ zur Gleitbahn verhindern.

Eine Möglichkeit der vorgenannten Sicherung gegen Verdrehen oder Längsverschieben besteht darin, daß die Gleitbahn aus zwei durch einen mittigen Längsschlitz geteilten Gleitbahnen besteht. Im letztgenannten Falle kann das Gleitstück Gleitflächen aufweisen, die einerseits mit den beiden Gleitbahnen seitlich des Schlitzes und andererseits auch mit dem Schlitz selbst, also mit seinen inneren Wandungen, gleitend zusammenwirken.

Zur sicheren Montage und zum dauerhaften, jedoch gleitfähigen Halt, aber auch zum leichten Auswechseln, kann das Gleitstück seitlich die Gleitbahn oder Gleitbahnen umgreifende Führungsansätze oder ähnliches umfassen, deren Enden als Befestigungsclipse hinter die Gleitbahn oder Gleitbahnen greifen.

Für eine verbesserte Gleitwirkung soll das Gleitstück mindestens eine mit der Gleitbahn zusammenwirkende Gleitfläche aufweisen, die eine Kurve bzw. einen Teilkreis darstellt, wobei deren Krümmung gleich oder größer, bzw. dessen Radius gleich oder kleiner ist als bei der Gleitbahn.

Eine sehr stabile und kompakte Gestaltung der Vorrichtung ist erzielbar, wenn der Hebel im Querschnitt U-förmig ausgebildet ist. Dann kann er vorzugsweise aus Stahlblech gebogen sein. In diesem Falle kann sich die Gleitbahn vorzugsweise an der Außenseite des U-Stegs befinden.

Zur weiteren Erleichterung der Nachstellung, nämlich ohne zweites Werkzeug, ist die Zugstange in dem Formteil längs verschiebbar aber unverdrehbar geführt und sind am Formteil Führungsmittel angeordnet, die mit entsprechenden Führungsmitteln an den Innenseiten der U-Schenkel bei sich verschwenkendem Hebel gleitbar zusammenwirken, jedoch das Formteil an einem Verdrehen hindern. Diese Führungsmittel können insbesondere so ausgebildet sein, daß das Formteil bzw. die U-Schenkel mit Führungsnocken in Führungsnuten der U-Schenkel bzw. des Formteils eingreifen.

Im vorstehenden Fall ist ein gleichartiger, bezüglich der Drehachse paralleler Verlauf der Führungsnuten zu der Gleitbahn für das Gleitstück vorgesehen, d.h., daß der Kurvenverlauf der Gleitbahn am U-Steg kongruent ist zum Kurvenverlauf der Führungsmittel bzw. Führungsnuten an den Schenkeln.

Zur Minderung der Gleitreibung ist das Formteil oder sind mindestens seine Führungsmittel aus einem gleitfähigen Kunststoff, wie Polyamid, Silikon oder dergleichen gebildet. Schließlich ist eine optimale Raumausnutzung erzielt, wenn der Winkel zwischen dem wirksamen Hebelarm des Hebels und der Zugstange in der Ausgangsstellung etwa 90° +/- 10° und in der Endstellung etwa 30° +/- 5° beträgt.

In der Zeichnung ist ein Ausführungsbeispiel der Erfindung dargestellt, das nun näher beschrieben wird.

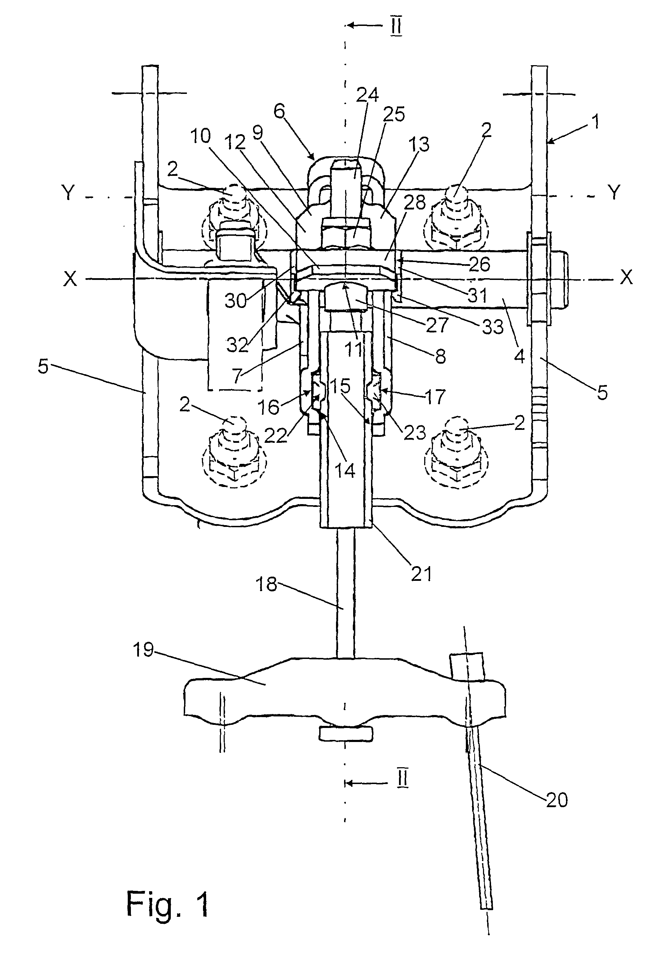

- Fig. 1: zeigt die Draufsicht auf eine Vorrichtung zum Betätigen einer Handbremse.

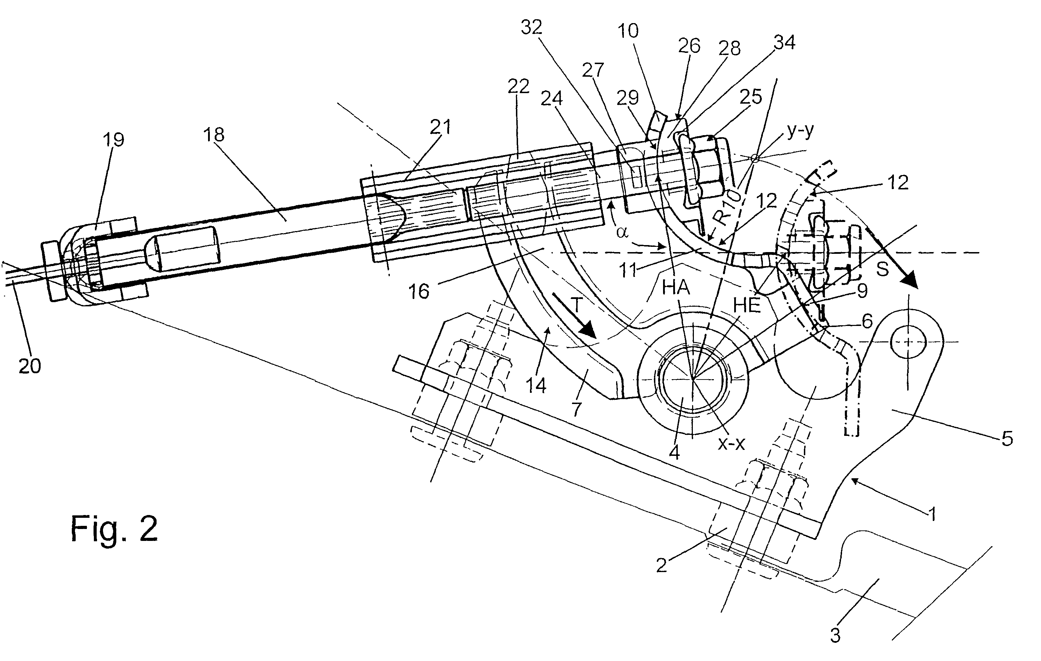

- Fig. 2: zeigt den Schnitt II-II in Fig. 1, in leicht vergrößertem Maßstab.

Die Vorrichtung besteht aus einem U-förmigen Halter 1, der mit vier Schrauben 2 auf dem Boden 3 eines Kraftfahrzeugs befestigt ist. Der Halter 1 umfaßt einen Achsbolzen 4, der in den Seitenwänden 5 des Halters 1 unverschiebbar, aber um die Achse X-X verdrehbar gelagert ist. Mit dem Bolzen 4 ist ein nicht dargestellter Handbremshebel starr verbunden.

Des weiteren ist mit dem Bolzen 4 ein Hebel 6 verdrehfest verbunden. Der Hebel 6 besteht aus Stahlblech, ist im Querschnitt U-förmig gebogen und mit seinen unteren Enden seiner Schenkel 7 und 8 mit dem Bolzen 4 verschweißt. Der U-Steg 9 des Hebels 6 weist außen, im oberen Bereich eine teilkreisförmige, zylindrische Durchbiegung 10 mit dem Radius R10 auf. In die Durchbiegung 10 ist ein mittiger, geschlossener Schlitz 11 eingebracht. Beiderseits des Schlitzes 11 erstrecken sich ebenfalls teilkreisförmige, zylindrisch gebogene Gleitbahnen 12 und 13.

An den Innenseiten 14 und 15 der Schenkel 7 und 8 sind Führungsnuten 16 und 17 eingebracht. Die Führungsnuten 16 und 17 verlaufen völlig parallel zu der Durchbiegung 10, sind also ebenfalls teilkreisförmig und zylindrisch ausgebildet und haben den selben Kreismittelpunkt, wie die Durchbiegung 10. Die entsprechende Achse der Durchbiegung 10, der Gleitbahnen 12 und 13, sowie der Führungsnuten 16 und 17 ist mit Y-Y bezeichnet.

Die Vorrichtung umfaßt des weiteren eine Zugstange 18, die mit einem Balken 19 in Zugverbindung steht. An den Balken 19 sind Seilzüge 20 angebracht, die zur Betätigung von nicht gezeigten Feststellbremsen dienen. Die Zugstange 18 ist durch ein Formteil 21 aus gleitfähigem Kunststoff längsbeweglich aber unverdrehbar geführt. Das Formteil 21 greift mit seitlichen, leicht ovalen Führungsnocken 22 und 23 in die Führungsnuten 16 und 17 gleitend ein.

Die Zugstange 18 umfaßt an ihrem freien, rechten Ende ein Schraubgewinde 24, das den Schlitz 11 durchquert und mit einer Schraubenmutter 25 abschließt. Zwischen der Schraubenmutter 25 und dem Schlitz 11 ist ein Gleitstück 26 auf das Schraubgewinde 24 der Zugstange 18 aufgebracht. Das Gleitstück 26 ist aus einem gleitfreundlichen Kunststoff hergestellt und besteht aus einem im Querschnitt runden Schaftteil 27, das sich durch den Schlitz 11 zwischen die Schenkel 7 und 8 erstreckt. Es umfaßt des weiteren einen Kopfteil 28 mit besonderer Ausbildung: Zunächst liegt der Kopfteil 28 mit zwei Gleitflächen 29 an den Gleitbahnen 12 und 13 neben dem Schlitz 11 an. Die Gleitflächen 29 haben dieselbe Wölbung wie die Gleitbahnen 12 und 13 der Durchbiegung 10 des U-Stegs 9, also den selben Radius R10 und den selben Kreismittelpunkt und die selbe Achse Y-Y.

Das Gleitstück 26 umfaßt des weiteren zwei seitliche Ansätze 30 und 31, deren Enden als Befestigungsclipse 32 und 33 hinter den U-Steg 9, also hinter die Gleitbahnen 12 und 13 greifen. Neben den Gleitflächen 29 am Kopfteil 28 wirkt das Gleitstück 26 auch über den Schaftteil 27 gleitend mit den inneren Seitenwandflächen des Schlitzes 11 zusammen. Ein gewisser seitlicher Toleranzausgleich kann über die Ansätze 30 und 31 und über die Befestigungsclipse 32 und 33 herbeigeführt werden. Die Schaubenmutter 25 ist selbsthemmend ausgebildet und liegt mit ihrem unteren Abschnitt in einer Vertiefung 34 des Gleitstücks 26.

Bei einer Betätigung der Vorrichtung, also beim Anziehen der Feststellbremse über den nicht gezeigten Handbremshebel, verschwenkt sich der Hebel 6 um die Achse X-X, und mit ihm die Achse Y-Y, nach rechts, in Richtung S. Entsprechend verschwenkt sich gleichzeitig auch der U-Steg 9 mit der Durchbiegung 10. In folge der Zugbelastung an der Zugstange 18 gleitet das Gleitstück 26 über die Gleitbahnen 12 und 13 etwas nach unten, zur Drehachse X-X hin, vermindert also seinen Abstand HA zur Drehachse X-X auf den Abstand HE. Gleichzeitig gleiten die Führungsnocken 22 und 23 in den Führungsnuten 16 und 17 nach unten in Richtung T.

Der anfänglich zwischen der wirksamen Hebellänge und der Zugstange 18 vorhandene Winkel Alpha von ca. 90° beträgt in maximaler Endstellung der Verschwenkung nur noch ca. 30°.

Haben sich die Seilzüge 20 gedehnt bzw. ist durch Verschleiß eine Nachstellung des Seilbetätigungsweges notwendig, und wird folglich der Hebelweg zu lang, so wird zur Nachstellung die Schraubenmutter 25 etwas nach links auf das Schraubgewinde 24 aufgeschraubt. Dies kann ohne zweites Werkzeug zum Gegenhalten geschehen, da ein Verdrehen der Zugstange 18 im Formteil 21 und ein Verdrehen des Formteils 21 zwischen den Schenkeln 7 und 8 des Hebels 6 nicht möglich ist.

Üblicherweise hält ein Gleitstück 26 ein Autoleben lang. Sollte dennoch ein Auswechseln des Gleitstücks 26 erforderlich werden, so kann dies leicht nach dem Entfernen der Schraubenmutter 25 geschehen: Die Befestigungsclipse 32 und 33 können leicht abgebogen, das Gleitstück 26 entfernt und durch ein neues ersetzt werden.

## Patentansprüche

1. Vorrichtung zum Betätigen eines Seilzugs (19, 20), umfassend
einen um eine Achse (X-X) verschwenkbaren Hebel (6),
eine Verbindungsvorrichtung (18) zum zugfesten Verbinden des Seilzugs (19, 20) mit dem Hebel (6) in einem durch Verschwenken (S) des Hebels (6) vermindernden Abstand (HA, HE) zur Achse (X-X), wobei die Verbindungsvorrichtung (18) als eine Zugstange mit variabler Wirklänge ausgebildet ist,
eine quer zu der Zugstange (18) verlaufende Gleitbahn (12, 13), wobei die Zugstange (18) und die Gleitbahn (12, 13) mittels eines Gleitstücks (26) gekoppelt sind, und
eine Vorrichtung (24, 25) zum Einstellen der variablen Wirklänge der Zugstange (18),
**dadurch gekennzeichnet,**
**dass** der verschwenkbare Hebel (6) die Gleitbahn (12, 13) aufweist,
**dass** die Gleitbahn (12, 13) einen Kurvenverlauf (10) aufweist, und
**dass** eine an dem Hebel (6) ausgebildete Führungsvorrichtung (16, 17) mit einem die Zugstange (18) führenden Formteil (21) gekoppelt ist.

2. Vorrichtung nach Anspruch 1, **dadurch gekennzeichnet, dass** die Zugstange (18) zum Einstellen der variablen Wirklänge ein Schraubgewinde (24) aufweist, das mit einer Schraubenmutter (25) zusammenwirkt.

3. Vorrichtung nach Anspruch 2, **dadurch gekennzeichnet, dass** das Gleitstück (26) von dem Schraubgewinde (24) durchdrungen ist und von der Schraubenmutter (25) gegen die Gleitbahn (12, 13) gehalten wird.

4. Vorrichtung nach Anspruch 2 oder 3, **dadurch gekennzeichnet, dass** das Gleitstück (26) eine Vertiefung (34) zur mindestens teilweisen Aufnahme der Schraubenmutter (25) aufweist.

5. Vorrichtung nach einem der Ansprüche 2 bis 4, **dadurch gekennzeichnet, dass** die Schraubenmutter (25) selbsthemmend ausgebildet ist.

6. Vorrichtung nach einem der Ansprüche 1 bis 5, **dadurch gekennzeichnet, dass** Mittel (30, 31, 32, 33) an der Gleitbahn (12, 13) und/oder an dem Gleitstück (26) vorgesehen sind, die ein Verdrehen und/oder ein Längsverschieben des Gleitstücks (26) relativ zu der Gleitbahn (12, 13) verhindern.

7. Vorrichtung nach einem der Ansprüche 1 bis 6, **dadurch gekennzeichnet, dass** die Gleitbahn aus zwei durch einen Schlitz (11) geteilten Gleitbahnen (12, 13) besteht.

8. Vorrichtung nach Anspruch 7, **dadurch gekennzeichnet, dass** das Gleitstück (26) Gleitflächen (27, 29) aufweist, wobei eine Gleitfläche (29) mit den beiden Gleitbahnen (12, 13) seitlich des Schlitzes (11 ) und eine andere (27) mit dem Schlitz (11) selbst gleitend zusammenwirkt.

9. Vorrichtung nach Anspruch 8, **dadurch gekennzeichnet, dass** zumindest die Gleitflächen (27, 29) des Gleitstücks (26) aus einem gleitreibungsarmen Werkstoff bestehen.

10. Vorrichtung nach einem der Ansprüche 1 bis 9, **dadurch gekennzeichnet, dass** das Gleitstück (26) seitlich die Gleitbahn (12, 13) umgreifende Führungsansätze (30, 31) umfaßt, deren Enden als Befestigungsclipse (32, 33) hinter die Gleitbahn (12, 13) greifen.

11. Vorrichtung nach einem der Ansprüche 1 bis 10, **dadurch gekennzeichnet, dass** der Kurvenverlauf (10) der Gleitbahn (12, 13) einen Teilkreis darstellt.

12. Vorrichtung nach einem der Ansprüche 1 bis 11, **dadurch gekennzeichnet, dass** das Gleitstück (26) mindestens eine mit der Gleitbahn (12, 13) zusammenwirkende Gleitfläche (29) aufweist, die eine Kurve bzw. einen Teilkreis darstellt, wobei deren Krümmung gleich oder größer bzw. dessen Radius gleich oder kleiner ist als bei der Gleitbahn (12, 13).

13. Vorrichtung nach einem der Ansprüche 1 bis 12, **dadurch gekennzeichnet, dass** die Führungsvorrichtung (16, 17) für die Zugstange (18) einen zu dem Kurvenverlauf (10) der Gleitbahn (12, 13) kongruenten Verlauf aufweist.

14. Vorrichtung nach einem der Ansprüche 1 bis 13, **dadurch gekennzeichnet, dass** die Zugstange (18) derart in dem Formteil (21) geführt ist, dass die Zugstange (18) zwar längs verschiebbar aber unverdrehbar ist.

15. Vorrichtung nach einem der Ansprüche 1 bis 14, **dadurch gekennzeichnet, dass** an dem Formteil (21) zu der Führungsvorrichtung (16, 17) komplementäre Führungsmittel (22, 23) angeordnet sind.

16. Vorrichtung nach Anspruch 15, **dadurch gekennzeichnet, dass** das Formteil (21) oder mindestens seine Führungsmittel (22, 23) aus einem gleitfähigen Kunststoff besteht bzw. bestehen.

17. Vorrichtung nach Anspruch 15 oder 16, **dadurch gekennzeichnet, dass** die Führungsvorrichtung (16, 17) an Innenseiten (14, 15) von Schenkeln (7, 8) des Hebels (6) angeordnet ist und bei sich verschwenkendem Hebel (6) mit den Führungsmitteln (22, 23) des Formteils (21) gleitbar zusammenwirkt, jedoch das Formteil (21) an einem Verdrehen hindert.

18. Vorrichtung nach Anspruch 17, **dadurch gekennzeichnet, dass** das Formteil (21) bzw. die Schenkel (7, 8) mit Führungsnocken (22, 23) in Führungsnuten (16, 17) der Schenkel (7, 8) bzw. des Formteils (21) eingreifen.

19. Vorrichtung nach einem der Ansprüche 1 bis 18, **dadurch gekennzeichnet, dass** der Hebel (6) im Querschnitt U-förmig ausgebildet ist.

20. Vorrichtung nach Anspruch 19, **dadurch gekennzeichnet, dass** die Gleitbahn (12, 13) an einem Steg (9) des U-förmigen Hebels (6) angeordnet ist.

21. Vorrichtung nach einem der Ansprüche 1 bis 20, **dadurch gekennzeichnet, dass** ein Winkel (α) zwischen dem wirksamen Hebelarm des Hebels (6) und der Zugstange (18) in einer Ausgangsstellung 90° +/-10° und in einer Endstellung 30° +/- 5° ist.

22. Verwendung der Vorrichtung nach einem der Ansprüche 1 bis 21 als Feststellbremse in einem Kraftfahrzeug.

## Claims

1. A device for actuating a cable (19, 20), comprising
a lever (6) which can be pivoted about an axis (X-X),
a connecting device (18) for connecting the cable (19, 20) in an extension-resistant manner to the lever (6) at a distance (HA, HE) from the axis (X-X) which is decreased by pivoting (S) of the lever (6), wherein the connecting device (18) is designed as a traction rod having a variable length,
a slideway (12, 113) running transversely to the traction rod (18), wherein the traction rod (18) and the slideway (12, 13) are coupled by a sliding component (26), and
a device (24, 25) for reducing the effective length of the connecting device (18),
**characterized in**
**that** the pivotable lever (6) comprises the slideway (12, 13),
**that** the slideway (12, 13) has a profile in the form of a curve (10), and
**that** a guide device (16, 17) arranged at the lever (6) is coupled to a shaped part (21) guiding the traction rod (18).

2. The device as claimed in claim 1, **characterized in that** the traction rod (18) has a screw thread (24) for resetting the active length wherein the screw thread (24) interacts with a screw nut (25).

3. The device as claimed in claim 2, **characterized in that** the sliding component (26) is penetrated by the screw thread (24) and is held against the slideway (12, 13) by the screw nut (25).

4. The device as claimed in claim 3, **characterized in that** the sliding component (26) has a recess (34) for accommodating at least part of the screw nut (25).

5. The device as claimed in one of claims 2 to 4, **characterized in that** the screw nut (25) is of self-locking design.

6. The device as claimed in one of claims 1 to 5, **characterized in that** the sliding component (26) consists at least on its sliding surfaces (29) of a material which is low in sliding friction.

7. The device as claimed in one of claims 1 to 6, **characterized in that** means (30, 31, 32, 33) are provided on the slideway (12, 13) and/or on the sliding component (26) and prevent rotation and/or longitudinal displacement of the sliding component relative to the slideway (12, 13).

8. The device as claimed in one of claims 1 to 7, **characterized in that** the slideway comprises two slideways (12, 13) which are divided by a slot (11).

9. The device as claimed in claim 8, **characterized in that** the sliding component (26) has sliding surfaces (29, 27), one sliding surface (29) interacting in a sliding manner with the two slideways (12, 13) to the side of the slot (11) and another sliding surface (27) interacting in a sliding manner with the slot (11) itself.

10. The device as claimed in one of claims 1 to 9, **characterized in that** the sliding component (26) contains guide projections (30, 31) which engage laterally around the slideway or slideways (12, 13) and the ends of which grip behind the slideway or slideways (12, 13) as fastening clips (32, 33).

11. The device as claimed in claim 10, **characterized in that** the curve (10) constitutes a part-circle.

12. The device as claimed in claim 10 or 11, **characterized in that** the sliding component (26) has at least one sliding surface (29) which interacts with the slideway (12, 13) and constitutes a curve or a part-circle, the curvature of said curve being equal to or greater than the slideway (12, 13) or the radius of said part-circle being equal to or smaller than the slideway (12, 13).

13. The device as claimed in one of claims 10 to 12, **characterized in that** the profile of the guide device (16, 17) for the traction rod (18) is congruent with the curved profile (10) of the slideway (12, 13).

14. The device as claimed in one of claims 1 to 13, **characterized in that** the traction rod (18) is guided in the shaped part (21) in such a manner that although the traction rod (18) can be displaced longitudinally, it cannot be rotated.

15. The device as claimed in one of claims 1 to 14, **characterized in that** guide means (22, 23) which are complementary to the guide device (16, 17) on the lever (6) are arranged on the shaped part (21).

16. The device as claimed in claim 15, **characterized in that** the shaped part (21) or at least its guide means (22, 23) consists or consist of a slidable plastic.

17. The device as claimed in claim 15 or 16, **characterized in that** the guide device (16, 17) are arranged on insides (14, 15) of limbs (7, 8) of the lever (6) and, as the lever (6) pivots, interact in a slidable manner with the guide means (22, 23) of the shaped part (21) but prevent the shaped part (21) from rotating.

18. The device as claimed in claim 17, **characterized in that** the shaped part (21) or the limbs (7, 8) engage by means of guide cams (22, 23) in guide grooves (16, 17) of the limbs (7, 8) or of the shaped part (21).

19. The device as claimed in one of claims 1 to 18, **characterized in that** the lever (6) is of U-shaped design in cross section.

20. The device as claimed in claim 19, **characterized in that** the slideway (12, 13) is situated on a web (9) of the U-shaped lever (6).

21. The device as claimed in one of claims 1 to 20, **characterized in that** the angle (α) between the effective lever arm of the lever (6) and the traction rod (18) is 90° +/- 10° in the starting position and 30° +/-5° in the end position.

22. Use of the device as claimed in one of claims 1 to 21 as a parking brake in a motor vehicle.

## Revendications

1. Dispositif d'actionnement d'un câble (19, 20) comportant
un levier (6) apte à pivoter autour d'un axe (X-X),
un dispositif de liaison (18) destiné à relier fixe en traction le câble (19, 20) au levier (6) à une distance (HA, HE) par rapport à l'axe (X-X) réduite par le basculement (S) du levier (6), le dispositif de liaison (18) étant conformé en barre de traction de longueur active variable,
une piste de glissement (12, 13) s'étendant transversalement à la barre de traction (18), la barre de traction (18) et la piste de glissement (12, 13) étant couplées au moyen d'une pièce coulissante (26), et
un dispositif (24, 25) destiné à régler la longueur active variable de la barre de traction (18),
**caractérisé en ce que**
le levier pivotant (6) comporte la piste de glissement (12, 13),
la piste de glissement (12, 13) comporte une allure incurvée (10) et
un dispositif de guidage (16, 17), conformé sur le levier (6), est couplé à une pièce moulée (21) guidant la barre de traction (18).

2. Dispositif selon la revendication 1, **caractérisé en ce que**, pour régler la longueur active variable, la barre de traction (18) comporte un filetage (24) qui coopère avec un écrou (25).

3. Dispositif selon la revendication 2, **caractérisé en ce que** la pièce coulissante (26) est traversée par le filetage (24) et est maintenue par l'écrou (25) contre la piste de glissement (12, 13).

4. Dispositif selon la revendication 2 ou 3, **caractérisé en ce que** la pièce coulissante (26) comporte une cavité (34) destinée à recevoir au moins partiellement l'écrou (25).

5. Dispositif selon l'une des revendications 2 à 4, **caractérisé en ce que** l'écrou (25) est conformé pour être à blocage automatique.

6. Dispositif selon l'une des revendications 1 à 5, **caractérisé en ce qu'**il est prévu sur la piste de glissement (12, 13) et/ou la pièce coulissante (26) des moyens (30, 31, 32, 33) qui empêche la pièce coulissante (26) de tourner et/ou de se déplacer en translation par rapport à la piste de glissement (12, 13).

7. Dispositif selon l'une des revendications 1 à 6, **caractérisé en ce que** la piste de glissement se compose de deux pistes de glissement (12, 13) séparées par une fente (11).

8. Dispositif selon la revendication 7, **caractérisé en ce que** la pièce coulissante (26) présente des surfaces de glissement (27, 29), une surface de glissement (29) coopérant à glissement avec les deux pistes de glissement (12, 13) latéralement à la fente (11) et une autre piste de glissement (27) coopérant à glissement avec la fente (11) elle-même.

9. Dispositif selon la revendication 8, **caractérisé en ce que** au moins les surfaces de glissement (27, 29) de la pièce coulissante (26) sont en un matériau présentant une faible friction de glissement.

10. Dispositif selon l'une des revendications 1 à 9, **caractérisé en ce que** la pièce coulissante (26) comporte latéralement des pièces rapportées de guidage (30, 31) qui enserrent la piste de glissement et dont les extrémités s'engagent en arrière de la piste de glissement comme des agrafes de fixation (32, 33).

11. Dispositif selon l'une des revendications 1 à 10, **caractérisé en ce que** l'allure incurvée (10) de la piste de glissement (12, 13) représente un secteur circulaire.

12. Dispositif selon l'une des revendications 1 à 11, **caractérisé en ce que** la pièce coulissante (26) comporte au moins une surface de glissement (29) qui coopère avec la piste de glissement (12, 13) et qui représente une courbe respectivement un secteur circulaire dont la courbure est supérieure ou égale à celle de la piste de glissement (12, 13), ou le rayon est inférieur ou égal à celui de ladite piste de glissement.

13. Dispositif selon l'une des revendications 1 à 12, **caractérisé en ce que** le dispositif de guidage (16, 17) destiné à la barre de traction (18) a une allure correspondant à l'allure incurvée (10) de la piste de glissement (12, 13).

14. Dispositif selon l'une des revendications 1 à 13, **caractérisé en ce que** la barre de traction (18) est guidée dans la pièce moulée (21) de telle sorte que la barre de traction (18) peut se déplacer en translation mais sans pouvoir tourner.

15. Dispositif selon l'une des revendications 1 à 14, **caractérisé en ce que** des moyens de guidage (22, 23) complémentaires du dispositif de guidage (16, 17) sont disposés sur la pièce moulée (21).

16. Dispositif selon la revendication 15, **caractérisé en ce que** la pièce moulée (21) ou au moins ses moyens de guidage (22, 23) sont en une matière plastique permettant de glisser.

17. Dispositif selon la revendication 15 ou 16, **caractérisé en ce que** le dispositif de guidage (16, 17) est disposé sur des côtés intérieurs (14, 15) de branches (7, 8) du levier (6) et, lorsque le levier pivote, coopère à glissement avec les moyens de guidage (22, 23) de la pièce moulée (21) tout en empêchant la pièce moulée (21) de tourner.

18. Dispositif selon la revendication 17, **caractérisé en ce que** la pièce moulée (21) ou les branches (7, 8) s'engagent avec des ergots de guidage (22, 23) placés dans des gorges de guidage (16, 17) des branches (7, 8) ou de la pièce moulée (21).

19. Dispositif selon l'une des revendications 1 à 18, **caractérisé en ce que** le levier (6) et conformé en U en coupe transversale.

20. Dispositif selon la revendication 19, **caractérisé en ce que** la piste de glissement (12, 13) est disposée sur un dos (9) du levier en forme de U (6).

21. Dispositif selon l'une des revendications 1 à 20, **caractérisé en ce que** l'angle (α) compris entre le bras actif du levier (6) et la barre de traction (18) est de 90° ± 10° dans sa position de départ et de 30° ± 5° dans sa position finale.

22. Utilisation du dispositif selon l'une des revendications 1 à 21 comme frein de stationnement dans un véhicule automobile.
